# EUROPEAN PATENT APPLICATION

(11) **EP 1 096 381 A2**
(43) Date of publication of application: **02.05.2001**
(21) Application number: 00123515.9
(22) Date of filing: 27.10.2000
(51) Int. Cl.: G06F 11/14

(54) **Recovery system and method for computer operating systems**

(30) Priority: 28.10.1999 US 162051 P; 13.10.2000 US 687435
(71) Applicant: Agfa Corporation, Ridgefield Park, NJ 07660-2199 (US)
(72) Inventor: Racca, Anthony, North Andover, MA 01845 (US); Bussard, Mark, Salem, NH 03079 (US)
(74) Representative: Van Ostaeyen, Marc Albert Jozef

(57) **Abstract**

A computer failure recovery system is disclosed for providing recovery of the operation of a computer system (10, 18, 22). The computer failure recovery system includes an operating system access assembly (16), an information retrieval assembly (11, 21), a recovery storage assembly (14, 15), and a file recovery assembly (24). The operating system access assembly is for accessing computer files that comprise a primary operating system in the computer system. The operating system access assembly includes an access operating system through which the computer files that comprise the primary operating system may be accessed. The information retrieval assembly is for retrieving copies of the computer files that comprise the primary operating system from the computer system. The recovery storage assembly is for storing the retrieved copies of the computer files that comprise the primary operating system on a recovery storage medium (14, 15, 24). The file recovery assembly is for copying the retrieved copies of the computer files that comprise the primary operating system from the recovery storage medium to the computer system in the event of a failure of the computer system.

## Description

### FIELD OF THE INVENTION

The invention relates generally to computer systems, and particularly relates to information recovery systems for digital computer systems.

### BACKGROUND OF THE INVENTION

Typically, a computer system is initially set up by first installing an operating system such as MS-DOS, WINDOWS 3.1, WINDOWS 95, or WINDOWS NT as sold by Microsoft Corporation of Redmond Washington, LINUX (developed by Linus Torvalds of Santa Clara, California), UNIX sold by UNIX (an operating system developed at AT&T now offered by many vendors), APPLE MACINTOSH sold by Apple Computers, Inc. of Cupertino, California, or any other operating system. Thereafter, specific software applications are installed according to the needs of the user. For example, a consumer personal computer (PC) running WINDOWS 98 may have the following applications installed: MICROSOFT OFFICE, including MICROSOFT WORD 97 and ACCESS sold by Microsoft Corporation, MCAFEE VIRUSCAN sold by McAffee Corporation of Sunnyvale, California, LOTUS NOTES sold by Lotus Corporation of Cambridge, Massachusetts, COMPTON'S ENCYCLOPEDIA sold by Mattel International of E1 Segundo California, IOMEGA ZIP DRIVE sold by Iomega, Inc. of Buffalo, New York, FILEMAKER PRO 4.0 sold by Adobe Systems, Inc. of San Jose, California, NORTON CLEANSWEEP sold by Symantec Corporation of Cupertino, California, and ADOBE ACROBAT sold by Adobe Systems, Inc. Other applications may be added or deleted as desired.

In the unfortunate event of a system failure rendering the user unable to restart (or reboot) the computer to the operating system, the user must follow certain laborious and time-consuming procedures to correct the problem. Specifically, the user must
(1) repair any hardware problems,
(2) reinstall the operating system from the original installation disk that were provided by the manufacturer, and
(3) individually install each of the applications that had previously been installed on the system prior to failure.

Any and all data files must also be recreated unless they had been saved on independent backup disks. Reinstalling the operating system and each application is time consuming since each application is separately installed and individual operator selections are made throughout the set-up process. Moreover, the set-up software is opened and closed for each application individually. Typically, reinstalling the operating system and application software might take an operator at least several hours. Also, sophisticated user knowledge is sometimes required to make appropriate selections during software installation so that the desired configuration may be obtained. Even after the complete system has been reinstalled onto an inoperable computer as described above, other unforeseen difficulties may arise. In this event, more time may be required of a skilled computer operator to continue to troubleshoot the system in an attempt to restore the computer to its original configuration prior to failure.

There is a need, therefore, for an improved system and method for restoring computer operating systems in an inoperable digital computer.

### OBJECTS OF THE INVENTION

It is a general object of the invention to provide a system and a method for restoring computer operating systems in an inoperable digital computer.

### SUMMARY OF THE INVENTION

The above mentioned object is realised by a system having the specific features set out in claims 1 or 11, or by a method having the specific features set out in claim 8. Specific features for preferred embodiments of the invention are set out in the dependent claims.

The invention provides a computer failure recovery system for providing recovery of the operation of a computer system. The computer failure recovery system includes an operating system access assembly, an information retrieval assembly, a recovery storage assembly, and a file recovery assembly. The operating system access assembly is for accessing computer files that comprise a primary operating system in the computer system. The operating system access assembly includes an access operating system through which the computer files that comprise the primary operating system may be accessed. The information retrieval assembly is for retrieving copies of the computer files that comprise the primary operating system from the computer system. The recovery storage assembly is for storing the retrieved copies of the computer files that comprise the primary operating system on a recovery storage medium. The file recovery assembly is for copying the retrieved copies of the computer files that comprise the primary operating system from the recovery storage medium to the computer system in the event of a failure of the computer system.

### BRIEF DESCRIPTION OF THE DRAWINGS

The following description may be further understood with reference to the accompanying drawings in which:
**Figure 1** shows an illustrative diagram of a system for recording information in accordance with an embodiment of the invention;
**Figure 2** shows an illustrative diagram of a system for recording information in accordance with another embodiment of the invention;
**Figure 3** shows an illustrative diagram of a system for recording information in accordance with a further embodiment of the invention; and
**Figure 4** shows an illustrative diagram of the steps involved in creating a backup device in accordance with an embodiment of the invention in which a CD is recorded.

The drawings are shown for illustrative purposes only, and are not to scale.

### DETAILED DESCRIPTION OF THE INVENTION

The present invention provides for the creation and use of a disaster recovery disk, such as a compact disc (CD). The recovery CD is hereafter referred to as the Restore Default Original Configuration (RDOC) CD. The RDOC CD essentially contains a compressed copy of all of the digital information stored in the computer system's memory unit, including: the operating system, all applications, and all data files, that are resident on the computer at the time of capture of the RDOC CD data. For example, the RDOC CD may contain WINDOWS 98 operating system, MICROSOFT WORD 97, ACCESS, MCAFEE VIRUSSCAN, LOTUS NOTES, COMPTON'S ENCYCLOPEDIA, IOMEGA ZIP DRIVE, FILEMAKER PRO 4.0, NORTON CLEANSWEEP and ADOBE ACROBAT. If and when the computer fails and the operator is unable to restart the operating system, the RDOC CD may be used to restore the computer to an original configuration, rather than reinstall the complete operating system and each of the applications and data files. All potential hardware problems should be addressed prior to running the RDOC CD.

The system and method of the invention may be utilised in a wide variety of applications. In accordance with an embodiment of the invention, the RDOC CD may be created at the factory for computers that have been set up at the factory such that the operating system and the applications are installed by the manufacturer or dealer. In this case, the RDOC CD may be provided to the end-user customer with the computer. This approach may be useful for non-technical users that do not wish to install any applications on their computers.

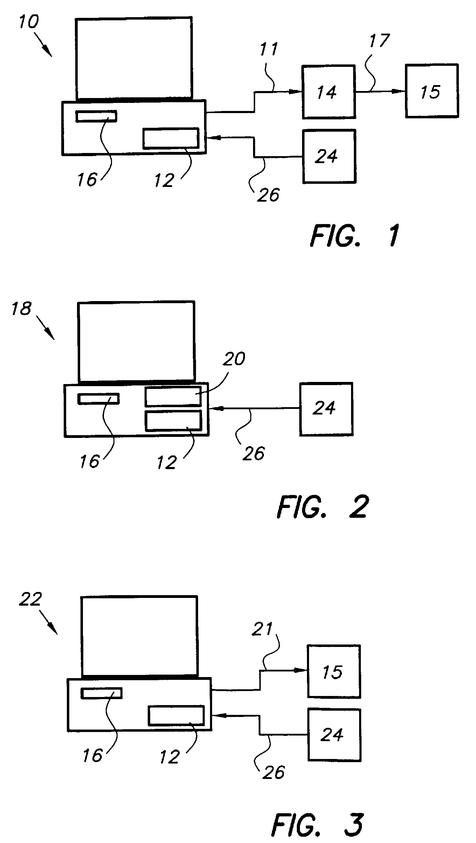

As shown in Figure 1, in another embodiment of the invention, the RDOC CD may also be created at the customer's site. With reference to Figure 1, an image of the primary operating system and applications on a computer 10 may be copied as indicated at 11 from a computer storage medium, e.g., an internal hard drive 12, to a high speed external hard drive 14 such as a 4 or 6.4 gigabyte KANGURU PARALLEL 3.5 (e.g., KP-34/64) sold by Interactive Media Corporation of Holliston, Massachusetts. The high-speed external hard drive 14 may be connected to the computer through any data access port, although the parallel port is preferred. Other ports could be used if desired, such as small computer systems interface (SCSI), which is a high-speed parallel interface for connecting computers to peripheral devices. The image stored on the external hard drive 14 may later be copied to a CD at the factory or service location using recovery storage medium 15, e.g., a CD via a CD writing device as generally indicated at 17. The process of copying the information from the hard drive 12 to the external drive 14 is made possible by the use of an access operating system, e.g., WINDOWS 95, that may be resident on, for example, a 3.5 inch diskette that may be inserted into the 3.5 inch diskette drive 16 of the computer system.

Another embodiment of the invention, as shown in Figure 2, relates to systems in which the image of a computer's primary operating system and applications may be copied at a customer's site directly from a computer 18 to a CD writing device 20 that is internal to the computer 18. In other embodiments of the invention, as shown in Figure 3, the image of a computer's primary operating system and applications may be copied as indicated at 21 from a computer 22 to an external CD writing device 15 (e.g., via a parallel port). In either of these embodiments, the RDOC CD may be created at the customer site without any delay required by sending the data back to a factory or service location.

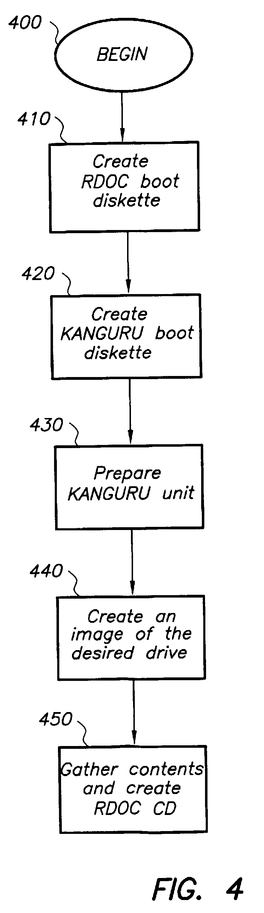

The steps for creating an RDOC disaster recovery CD in accordance with service instructions in an embodiment of the invention include developing an inventory list, creating the RDOC diskette, creating a KANGURU diskette, preparing the KANGURU diskette for the first time, creating an image of the computer storage drive that is desired to be captured, and gathering the contents of the computer storage drive to create the RDOC CD. These steps are detailed as follows with reference to Figure 4.

As shown at step 400 in Figure 4, the process of creating an RDOC recovery CD begins by identifying the list of items used in the RDOC process for creating an RDOC CD for use with a computer system for controlling prepress equipment in accordance with an embodiment of the invention. The list may include, for example, the following:
(1) a CD writing device such as HEWLETT PACKARD'S CD-WRITER PLUS 8110i (e.g., manufacturer's part number C4398A sold by Hewlett Packard, Inc. of Andover, Massachusetts);
(2) another CD writing device such as HEWLETT PACKARD'S CD-WRITER PLUS 8100i (e.g., manufacturer's part number C4392A);
(3) an external hard drive such as a 6.4 gigabyte KANGURU PARALLEL 3.5 INCH (e.g., manufacturer's part number KP-35/64;
(4) two high density (HD) preformatted non-bootable diskettes;
(5) three files that may be obtained from an Internet web site that provides technical support, including an RDOC boot diskette (RDBD.EXE), a KANGURU boot diskette (KBD.EXE), and certain command files needed for the basis disc operating system or DOS (CFN.EXE).

The RDBD.EXE file is a compressed file that contains an operating system that is capable of starting up a computer to a DOS prompt and engaging any and all CD-ROM drives. This includes the necessary files including the suffix ".exe" or ".com" or ".sys" from the operating system of the user's choice, along with the drivers for the CD-ROM drive.

The KBD.EXE file is a compressed file that contains an operating system that is capable of starting up a computer to a DOS prompt and engaging the KANGURU drive. This includes the necessary files including the suffix ".exe" or ".com" or ".sys" from the operating system of the user's choice, along with the drivers for the KANGURU drive.

The CFN.EXE file is a collection of files of the user's choice from the operating system from which the user will need any additional files such as files for editing text files to facilitate initialisation of the DOS environment.

As shown at step 410 in Figure 4, the RDOC diskette is then created. The RDOC diskette will engage the CD-ROM drive in the computer that the user is creating the RDOC CD to replicate. Once the RDOC diskette has been created, the computer is restarted using this RDOC floppy diskette. Once the computer starts up and engages the CD ROM drive correctly, then the system is ready for use. Specifically, a blank formatted non-bootable diskette is inserted into the diskette drive. The RDBD.EXE file is then expanded by opening the file. This file may be used to set up using WINDOWS 95 as the operating system to match the version of the files that may also be expanded out to the KANGURU drive.

As shown at step 420 in Figure 4, the KANGURU start up diskette is then created to engage the KANGURU device that is connected to the parallel port of the computer for which an image is to be created. The KBD.EXE file is then opened after a blank non-bootable formatted diskette is inserted into diskette drive. This file may be also used to set up using WINDOWS 95 as the operating system to match the version of the files that may also be expanded out to the KANGURU drive.

As shown at step 430 in Figure 4, the KANGURU drive is then prepared for the first time. The user is instructed to install a hard drive into the KANGURU unit and set it up for use in the preparation of the RDOC CD. Specifically, the IDE hard drive is installed on the circuit board inside the KANGURU and secured with four screws. The data cable and power cable are then coupled to the hard drive (typically in the rear of the hard drive). The cover is then slid onto unit and secured with four screws. The parallel cable is then coupled to the KANGURU unit (in the rear of the unit), and to the parallel port of the computer for which an RDOC image is being created. The system is then started from the KANGURU diskette created above. The hard drive is then formatted (e.g., by running Fdisk). For drives larger than 2 gigabytes, it may be necessary to first partition the hard drive into 2-gigabyte partitions from DOS mode. The system is then re-booted, and each partition is formatted. The system is now ready to use the KANGURU unit.

As shown at step 440 in Figure 4, an image of the drive that is desired to be recorded is then created. In this step, the GHOST duplication program sold by Symantec Corporation is used in either DOS or WINDOWS 95, 98 or NT format as appropriate. In other embodiments, other duplication programs such as POWERQUEST sold by Powerquest Corporation of Orem, Utah may be used. First, the operating system (e.g., WINDOWS 95) must be shut down. Then the KANGURU start-up diskette that was created in step 420 is inserted into the diskette drive. The KANGURU hard drive is then connected to the computer's parallel port, and the power cord is coupled to a power source. The computer is turned on and the user is instructed to cause the computer to enter into the BIOS set-up mode (e.g., by hitting the delete key while the memory is counting). The parallel port should be set up to operate in a high-speed mode, e.g., EPP mode or bi-directional mode, for best results.

The system is then started from the KANGURU start up diskette. The user should then notice the drive letter that is assigned to the KANGURU hard drive. At the DOS prompt for drive A (A:\), the duplication program (e.g., GHOST) is run. When GHOST is running, the following selections are made: LOCAL, DISK, and TO IMAGE. At the next selection, the local source drive is selected. Typically, the local source drive is drive number 1. Note the size of the drive in megabytes as well as the amount of partitions listed. This information will assist in confirming that the appropriate operation is being selected. The location where the image file for the drive is to be created is then selected. Specifically, select the LOCATION instruction and the appropriate drive letter that has been assigned to the KANGURU hard drive. A filename must then be assigned to the file (e.g., IMAGE). Preferably, high compression duplication is selected.

As shown at step 450 in Figure 4, the next step is to locate all of the files that are needed on the CD and copy each of the files to one folder. These files may be collected using the EASY ADAPTEC software sold by Adaptec, Inc. of Milpitas, California, which will facilitate identification of all the files that are to be written onto the CD. The EASY ADAPTEC software may also be used to write the files onto the CD. Specifically, a directory is created and named (e.g., RDOC) on the computer in which the CD write unit is installed. Into this directory are copied four files: CFN.EXE, RDBD.EXE, KBD.EXE and <filename>.GHO where the name of the appropriate file is inserted for <filename>. The file CFN.EXE is then opened and expanded into this directory.

To write the information onto the CD using ADAPTEC EASY software, the following steps may be undertaken. First, a new blank write enabled CD is inserted into the drive tray of a CD write device, e.g., a HEWLETT PACKARD CD WRITER. The tray is closed, and the operating software (e.g., WIZARD) is started. After selecting the process for a single CD, cancel the WIZARD and select CD layout properties. A label or name for the CD is then entered (e.g., odyssey), and the following information is entered via the data settings feature: IS09660 for the file system. The unit is then turned on via the bootable box feature. Once these steps are confirmed, the start-up diskette created in step 420 above is inserted into the diskette drive. When the drive is finished reading the diskette, select the drive, folders and subfolders that contain the desired data. Locate icons for all of the data that has been copied to this folder, and select all of the files by highlighting them using the shift and elevator keys. Move (or copy) these items to the open window. Then select the items to be added to the CD layout, and begin the CD write process. The feature of "no testing needed" should be selected, and a speed of 2x should also be selected. The writing process will begin when the disc drive is closed and the request is confirmed. An RDOC CD will then be created that may be used to recover all of the selected files from the CD using a CD read drive 24 as indicated at 26 in Figures 1 -3 (including the operating system, all selected applications and all selected data files) for the computer.

To use the RDOC recovery CD in the event of an emergency, the user may employ a duplication program such as the GHOST program and follow the steps for reloading the saved files. The user may also employ a specially designed operator interface that prompts the user with a limited number of questions. This is accomplished through the use of a batch file that is included on the RDOC CD that includes all of the necessary information regarding the configuration of the computer (e.g., the operating system, applications and data files). In the batch file, the prompts that appear in the GHOST program are addressed when the batch file is executed through the use of batch parameters. For example, the batch file will select the files to copy and the source drives from which the files will be copied, as well as the destination drives to which the files are to be copied. Typically, the operating system and application files are resident on the C drive, and the data files are stored on the D drive. The batch file could select to create an RDOC image of all files resident on the C drive, the D drive or both the C and D drives through separate batch file commands.

In a preferred embodiment of the method according to the current invention, the recovery storage medium includes a hard disc that is external to the computer system. In another embodiment, the recovery storage medium includes a compact disc. The step of copying the computer files that comprise the primary operating system from the recovery storage medium to the computer system may preferably include the step of executing an automated batch program.
In a preferred embodiment, the computer failure recovery system according to the current invention has a recovery storage assembly that includes a hard disc drive that is external to the computer system.
In the computer operating system providing system according to the current invention, the file providing assembly preferably includes a batch program for automatically copying the computer files that comprise a primary operating system for the computer system from the recorded storage medium to the computer storage medium within the computer system.
The computer operating system providing system according to the current invention preferably has a file providing assembly, including a batch program for automatically copying the computer files that comprise a primary operating system for the computer system from the recorded storage medium to the computer storage medium within the computer system. The computer operating system providing system according to the current invention, preferably has a file providing assembly for providing for the copying computer files that comprise application programs for the computer system from a recorded storage medium to the computer storage medium within the computer system.
The computer operating system providing system, according to the current invention, preferably has a computer storage medium access assembly further including an external diskette drive.

Those skilled in the art will appreciate that numerous modifications and variations may be made to the above-disclosed embodiments without departing from the scope of the present invention. For example, the system and method of the invention may be used to restore any type of digital information on any type of computer or digital processor throughout the computer industry.

## Claims

1. A computer failure recovery system for providing recovery of the operation of a computer system optionally including a primary operating system, said computer failure recovery system comprising:
- an operating system access assembly (16) for accessing computer files that comprise a primary operating system in the computer system, said operating system access assembly including an access operating system, optionally coupled internally or externally to the computer system, through which the computer files that comprise the primary operating system may be accessed;
- an information retrieval assembly (11,21) for retrieving copies of the computer files that comprise the primary operating system from the computer system;
- a recovery storage assembly (14,15) for storing said retrieved copies of the computer files that comprise the primary operating system on a recovery storage medium; and
- an optional file recovery assembly (24) for copying said retrieved copies of the computer files that comprise the primary operating system from the recovery storage medium to the computer system in the event of a failure of the computer system.

2. The computer failure recovery system according to claim 1, wherein said access operating system is provided on a computer diskette.

3. The computer failure recovery system according to any one of the previous claims, wherein said access operating system includes at least some WINDOWS 95 operating system files.

4. The computer failure recovery system according to any one of the previous claims, where said information retrieval assembly is also for retrieving copies of application files.

5. The computer failure recovery system according to any one of the previous claims, wherein said recovery storage assembly includes an external or internal hard disk drive or compact disk.

6. The computer failure recovery system according to any one of the previous claims, wherein said file recovery assembly includes an automated batch file:
- for automatically storing the computer files on said recovery storage medium; or,
- for copying the computer files that comprise the primary operating system from the recovery storage medium to the computer system in the event of a failure of the computer system.

7. The computer failure recovery system according to any one of the previous claims, wherein said recovery storage assembly is for storing said retrieved copies of the computer files in a compressed format.

8. A method of recovering a computer system including a primary operating system in the event of a failure of the computer system, said method comprising the steps of:
- starting the computer system (10,18,22) using an access operating system (16);
- accessing (11,21) computer files that comprise the primary operating system in the computer system;
- copying the computer files that comprise the primary operating system and storing the copies of the computer files in a recovery storage medium (14,15,24); and
- copying (26) the computer files that comprise the primary operating system from the recovery storage medium (24) to the computer system in the event of a failure of the computer system.

9. The method according to claim 8, wherein said step of accessing the computer files that comprise the primary operating system in the computer system includes the step of inserting a computer diskette into a diskette drive.

10. The method according to any one of claims 8 to 9, wherein said step of copying the computer files that comprise the primary operating system further includes the step of copying application files from the computer system.

11. A computer operating system providing system for providing an operating system for a computer system on a computer storage medium in the event that the computer system does not contain an operable operating system, said computer operating system providing system comprising:
- a computer storage medium access assembly (16) for accessing a computer storage medium (12) within the computer system, said computer storage medium access assembly including an access operating system through which the computer storage medium may be accessed; and
- a file providing assembly (24) for copying computer files that comprise a primary operating system for the computer system from a recorded storage medium to the computer storage medium within the computer system.
